# EUROPÄISCHE PATENTSCHRIFT

(11) **EP 1 900 572 B1**
(45) Veröffentlichungstag und Bekanntmachung des Hinweises auf die Patenterteilung: **03.08.2011**
(21) Anmeldenummer: 07116450.3
(22) Anmeldetag: 14.09.2007
(51) Int. Cl.: B60P 7/13

(54) **Vorrichtung zur Verstellung der vertikalen Position einer Containerverriegelung**
Device for adjusting the vertical position of a container locking device
Dispositif de déplacement de la position verticale d'une fermeture de conteneur

(30) Priorität: 14.09.2006 DE 102006043777
(43) Veröffentlichungstag der Anmeldung: 19.03.2008
(73) Patentinhaber: Jost-Werke GmbH, 63263 Neu-Isenburg (DE)
(72) Erfinder: Bönsel, Sven, 63263 Neu-Isenburg (DE); Paulekuhn, Hans-Peter, 34454 Bad Arolsen (DE)
(74) Vertreter: Fuchs

(56) Entgegenhaltungen:
- DE-A1- 1 815 351
- DE-A1- 19 755 638
- DE-U- 7 135 647
- GB-A- 1 208 477
- GB-A- 2 055 143

## Beschreibung

Die Erfindung betrifft eine höhenverstellbare Containerverriegelung, umfassend ein an einem Fahrzeugrahmen anbringbares Gehäuse und ein in unterschiedlichen Höhenlagen relativ zu dem Gehäuse verstellbares Halteelement, wobei in dem Halteelement ein Drehzapfen angeordnet ist, der in einen Verriegelungsbeschlag eines Containers einführbar ist, das Halteelement wahlweise in einer vorgegebenen Höhenlage in das Gehäuse einsetzbar ist und das Halteelement übereinander angeordnete Verbindungselemente umfasst, die zueinander in unterschiedlichen Höhenlagen beabstandet und jeweils mit mindestens einem komplementären Element des Gehäuses in Wirkeingriff bringbar sind.

In der Vergangenheit sind eine Vielzahl von Vorrichtungen bekannt geworden, die eine Höhenverstellung des Drehzapfens relativ zu der Oberseite des Fahrzeugrahmens ermöglichen. Besonders benötigt werden derartige höhenverstellbare Containerverriegelungen bei so genannten Gooseneck-Fahrzeugrahmen. Diese weisen an ihrem vorderen Ende eine S-förmige Niveauerhöhung auf. Die genormten 40 oder 45-Fuß-Container sind in diesem Bereich meistens mit einem Tunnel versehen und können daher mit endseitig an dem Fahrzeugrahmen angeordneten Containerverriegelungen auf einer Höhenlage verspannt werden. Problematisch ist der Transport jedoch von alten 40-Fuß-Containern ohne Tunnel, da im hinteren Bereich des Aufliegers der Container über Mittenauflagen auf das vordere höhere Niveau gebracht wird und demzufolge auch die heckseitigen Containerverriegelungen auf dieses höhere Niveau eingestellt werden müssen. Ebenso kann es möglich sein, dass auf demselben Auflieger zwei 20-Fuß-Container transportiert werden sollen, die grundsätzlich keinen Tunnel aufweisen und daher in Fahrtrichtung höhenversetzt auf dem Fahrzeugrahmen aufstehen. Für diese Fälle sind in einem mittleren Bereich des Aufliegers auf beiden Seiten zusätzlich jeweils zwei Containerverriegelungen angebracht, wobei die vordere der mittleren Containerverriegelungen ebenfalls höhenverstellbar sein muss.

Einen weiter entfernt liegenden Stand der Technik stellt die DE 195 38 915 A1 dar. Bei der bekannten Vorrichtung ist ortsfest an dem Fahrzeugrahmen ein Gehäuse befestigt, an welchem ein vertikal zur Fahrzeuglängsachse beweglicher Schieber geführt ist. Der Schieber trägt die Containerverriegelung und ist in zwei Endlagen gegenüber dem Gehäuse feststellbar. In der oberen Verriegelungsstellung befindet sich die Containerverriegelung auf der Höhe des vorderen höheren Niveaus eines Gooseneck-Fahrzeugrahmens und in der unteren Verriegelungsstellung auf der Höhe des niedrigen Niveaus im Heckbereich. Der wesentliche Nachteil dieser Vorrichtung liegt darin, dass der Drehzapfen auch in der unteren Verriegelungsstellung gegenüber dem Schieber nach oben übersteht. Dieses ist insbesondere für die mittleren Containerverriegelungen beim Transport von 45-Fuß-Containern mit Tunnel hinderlich, da die Drehzapfen vollständig unterhalb des Niveaus des Fahrzeugrahmens gebracht werden müssen, um nicht störend nach oben herauszuragen. Bei solchen Einsatzfällen ist es dann notwendig, die Verriegelungsinnenteile umfassend den Drehzapfen mit seiner Spannmutter sowie eine Führungsbuchse aus dem Schieber abzusenken oder herauszubauen. Darüber hinaus ist die laterale Führung des Schiebers empfindlich gegen einen Eintrag von Schmutz und Staub, so dass eine regelmäßige Wartung und Reinigung der Bauteile notwendig ist.

Eine andere Vorrichtung beschreibt die DE 10 2004 033 886 A1, wobei sich hier eine Trägereinrichtung gegenüber einer ortsfesten Aufnahmeeinrichtung mittels einer Hebelanordnung in einer Zwangsbahn zwischen zwei Höheneinstellungen verriegeln lässt. Ein Absenken des oberen Endes des Drehzapfens unterhalb eines Niveaus der Aufnahmeeinrichtung und/oder des Fahrzeugrahmens ist nicht möglich. Auch diese Konstruktion ist aufgrund der geschlossenen Bauweise empfindlich gegen Schmutz. Ein zusätzlicher Nachteil besteht darin, dass die Spannmutter innerhalb der kastenförmigen Trägereinrichtung angeordnet ist und nicht wie empfohlen von dem Bediener mit einem Schlüssel angezogen werden kann.

Die DE 1 815 351 C bildet den nächstkommenden Stand der Technik mit einem in einem Lagerbock gelagerten Verriegelungsbolzen, wobei der Lagerbock zusammen mit dem Verriegelungsbolzen in mehreren vertikal zueinander versetzten Stellungen in einen ortsfest am Fahrzeugrahmen angeordneten Verschlusskasten einsetzbar ist. Hierfür sind an dem Lagerbock entsprechend der Höhenlagen beabstandete Nuten eingebracht, die mit komplementär ausgebildeten Wandabschnitten des Verschlusskastens in Wirkeingriff bringbar sind. Der wesentliche Nachteil der bekannten Containerverriegelung liegt in der spiel behafteten Aufnahme des Lagerbocks in dem Verschlusskasten. Insbesondere in der obersten Höhenlage werden aufgrund der erheblichen Hebelwirkung äußerst große Lasten in den Lagerbock eingeleitet, die zu einem massiven Verschleiß führen können.

Weitere ähnliche Vorrichtungen sind aus GB 1 208 477 sowie DE 19 755 638 bekannt.

Aus diesem Grund liegt der Erfindung die Aufgabe zugrunde, eine höhenverstellbare Containerverriegelung bereitzustellen, die möglichst unanfällig gegen äußere Einflüsse ist, eine einfache Bedienung sowie eine möglichst vielseitige Anpassbarkeit an unterschiedliche Höhenlagen ermöglicht und dabei eine verschleißarme Verbindung des Halteelementes und des Gehäuses auch in der obersten Höhenlage ermöglicht.

Die Aufgabe wird erfindungsgemäß mit einer Containerverriegelung gelöst, bei der das Halteelement zweiteilig aufgebaut ist und einen Oberbau sowie eine Spannplatte umfasst, wobei der Oberbau die beiden oberen Verbindungselemente und die Spannplatte das untere Verbindungselement trägt. Dabei existieren innerhalb des Gehäuses keine weiteren zu verstellenden Bauteile. Die Einstellung der gewünschten Höhe erfolgt ausschließlich über die Einschubposition des Halteelementes in das Gehäuse. Das jeweilige mit der gewünschten Höhenlage korrespondierende Verbindungselement wird von dem Bediener in das komplementäre Element eingesetzt.

Die konstruktive Ausgestaltung kommt in der dritten Höhenlage zum Tragen. Dabei wird die Spannplatte bei einem Anziehen der Spannmutter nach oben in Richtung des Oberbaus gedrückt und verringert dadurch den Abstand zwischen dem mittleren und dem unteren Verbindungselement. Dieses wiederum führt dazu, dass das Halteelement in der dritten Höhenlage zwischen der Einschubnute und der Oberseite des Gehäuses verspannt und dadurch ohne Spiel gehalten ist. Insbesondere bei den großen in der dritten Höhenlage auf das Halteelement einwirkenden Momenten verringert sich der Verschleiß durch die spielfreie Lagerung erheblich.

Die einfache und offene Bauweise ohne zusätzliche bewegliche Bauteile wie zum Beispiel Steuerkulissen oder angelenkte Hebel verhindert ein Ansammeln von Schmutz während des Betriebes.

Vorzugsweise sind insgesamt drei Höhenlagen vorgesehen, die mit den Höhenniveaus des Gooseneck-Fahrzeugrahmens korrespondieren.

Dabei kann beispielsweise in einer ersten abgesenkte Höhenlage das obere Ende des Drehzapfens auf oder unterhalb eines Niveaus des Gehäuses angeordnet sein, in einer zweiten Höhenlage der Drehzapfen in Wirkeingriff mit einem Verriegelungsbeschlag eines auf dem Fahrzeugrahmen stehenden Containers und in einer dritten Höhenlage der Drehzapfen in Wirkeingriff mit einem Verriegelungsbeschlag eines in diesem Abschnitt oberhalb beabstandet zu dem Fahrzeugrahmen stehenden Containers bringbar sein. Unter dem Ausdruck oberhalb beabstandet zu dem Fahrzeugrahmen wird insbesondere ein auf dem vorderen höheren Niveau des Gooseneck-Fahrzeugrahmens aufstehender tunnelloser Container verstanden, der im hinteren Bereich des Aufliegers nicht auf dem niedriger gelegenen Fahrzeugrahmen sondern auf Mittenauflagen beabstandet zu dem Fahrzeugrahmen steht.

Besonders bevorzugt ist eine Ausgestaltung, bei der die drei Verbindungselemente des Halteelementes als ein jeweils an drei Seiten vorstehender Halterand ausgebildet sind.

Dabei kann das Gehäuse U-förmig mit drei Schenkeln ausgebildet sein. Bei dieser Anordnung der Schenkel bleibt eine Seite offen, so dass von dieser Seite das Halteelement in das Gehäuse horizontal eingeschoben werden kann.

Bei dieser Ausführungsform kann das mindestens eine komplementäre Element auf der Innenseite mindestens eines Schenkels angeordnet sein, beispielsweise in Form einer Einschubnute.

Günstigerweise ist ein weiteres komplementäres Element die Oberseite und die Unterseite des Gehäuses, an welcher jeweils ein Halterand zur Anlage kommen kann.

Zweckmäßigerweise befindet sich in der ersten abgesenkten Höhenlage der oberste Halterand in Wirkeingriff mit der Einschubnute. In dieser Position ist der Drehzapfen aus dem Einwirkungsbereich eines auf dem Fahrzeugrahmen aufstehenden Containers entfernt und unter das Höhenniveau der Oberseite des Gehäuses zusammen mit dem Halteelement abgesenkt. Hierbei handelt es sich um einen lastfreien Zustand des Drehzapfens, so dass eine Lagerung des Halterandes in der Einschubnute ausreicht.

In der zweiten Höhenlage des Halteelementes kann der Drehzapfen in Eingriff mit einem Containerbeschlag gebracht werden. Dabei sollte zumindest ein Halterand des Halteelementes auf der Oberseite des Gehäuses aufliegen und dadurch eine Auflast eines Containers in das Gehäuse und somit in den Fahrzeugrahmen einleiten, wobei der Drehzapfen die aus dem Fahrbetrieb resultierenden Drehmomente des Containers aufnimmt.

Besonders vorteilhaft ist jedoch eine Ausführungsform, bei welcher ein Halterand auf der Oberseite und ein Halterand auf der Unterseite des Gehäuses anliegt. Aufgrund der Lagerung des Halteelementes mit seinem oberen und mittleren Halterand gegenüber der oberen und unteren Außenfläche des Gehäuses erfolgt eine Zwei-Punkt-Lagerung, die eine Kippbewegung des Drehzapfens wirksam verhindert. In dieser Stellung nimmt die Einschubnute keinen Halterand auf.

Vorzugsweise liegt in der dritten Höhenlage des Halteelementes der mittlere Halterand auf der Oberseite des Gehäuses an und der untere Halterand befindet sich in Wirkeingriff mit der Einschubnute. Auch hierdurch erfolgt eine Zwei-Punkt-Lagerung des Halteelementes, die aufgrund des maximal gegenüber dem Gehäuse nach oben ragenden Halteelementes und dem damit verbundenen großen Hebelarm besonders wichtig ist.

Der Drehzapfen kann auf seiner Unterseite eine Spannmutter aufweisen. Dabei hat sich herausgestellt, dass die Spannmutter unterhalb des Halteelementes angeordnet sein sollte.

Vorteilhafterweise ist die Spannmutter darüber hinaus unterhalb der drei Schenkel des U-förmigen Gehäuses angeordnet. Dadurch ergibt sich eine gute Bedienbarkeit der Spannmutter und es ist zum Festziehen ein Ansetzen eines üblichen Schlüssels möglich.

Das U-förmige Gehäuse sollte an einer offenen Seite mit einem Sicherungsbolzen verschließbar sein. Der Sicherungsbolzen dient in allen Höhenlagen als Verlustsicherung des Halteelementes.

Günstigerweise ist in den gegenüberliegenden Schenkeln jeweils eine Bohrung zur Aufnahme des Sicherungsbolzens angeordnet, wobei die Achsen der Bohrungen in einer Flucht liegen. Hierdurch ergibt sich der Vorteil, dass ein gerader Sicherungsbolzen durch die gegenüberliegenden Schenkel hindurch gesteckt werden kann.

Vorteilhafterweise ist in dem Haltelement zum Durchstecken des Sicherungsbolzens in jeder verrasteten Höhenlage jeweils eine Ausnehmung angeordnet. In der ersten Höhenlage ist diese Ausnehmung ein freier Bauraum neben dem Drehzapfen in Richtung der offenen Seite des Gehäuses. In der zweiten und dritten Höhenlage dagegen ist das Halteelement vorzugsweise mit eigens dafür vorgesehenen horizontal verlaufenden Bohrungen durchsetzt.

Zum besseren Verständnis wird die Erfindung nachfolgend anhand von acht Figuren näher erläutert. Dabei zeigen die:
- Figur 1:: eine perspektivische Seitenansicht auf eine erfindungsgemäße Containerverriegelung in einer ersten Höhenlage;
- Figur 2:: eine Vorderansicht auf eine Containerverriegelung in der ersten Höhenlage;
- Figur 3:: eine perspektivische Seitenansicht auf eine erfindungsgemäße Containerverriegelung in einer zweiten Höhenlage;
- Figur 4:: eine Vorderansicht auf eine Containerverriegelung in der zweiten Höhenlage;
- Figur 5:: eine perspektivische Seitenansicht auf eine erfindungsgemäße Containerverriegelung in einer dritten Höhenlage;
- Figur 6:: eine Vorderansicht auf eine Containerverriegelung in der dritten Höhenlage;
- Figur 7:: eine Seitenansicht auf eine Containerverriegelung in der dritten Höhenlage;
- Figur 8:: eine Draufsicht auf eine Containerverriegelung in der dritten Höhenlage.

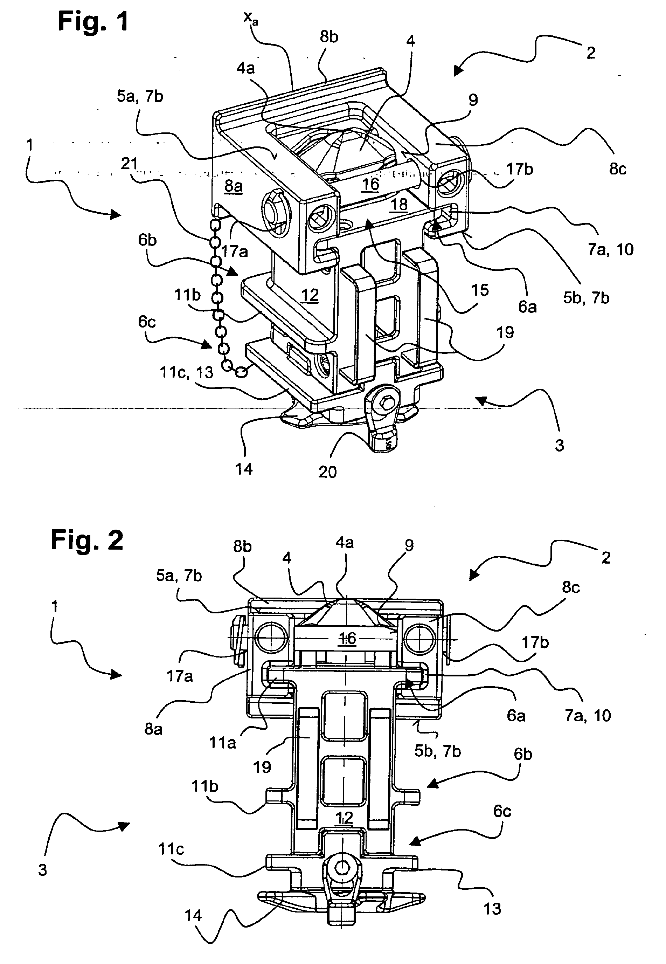

Die Figuren 1 und 2 zeigen eine erfindungsgemäße höhenverstellbare Containerverriegelung 1 in einer perspektivischen Seitenansicht beziehungsweise einer Seitenansicht. Die Containerverriegelung 1 umfasst als wesentliche Baugruppen das an einem nicht weiter gezeigten Fahrzeug ortsfest befestigte Gehäuse 2 und das darin einschiebbare Halteelement 3. Das Halteelement 3 befindet sich in den Darstellungen der Figuren 1 und 2 in einer ersten Höhenlage, dass heißt ist gegenüber dem Gehäuse 1 nach unten so weit abgesenkt, dass das obere Ende 4a eines in dem Halteelement 3 angeordneten Drehzapfens 4 nicht über das Niveau des Gehäuses 2 vorsteht.

Das Gehäuse 2 ist U-förmig durch drei etwa gleich lange Schenkel 8a, 8b, 8c gebildet, wobei der Schenkel 8b mit seiner Außenseite an dem nicht gezeigten Fahrzeug beispielsweise durch Anschweißen befestigt werden kann. Die Schenkel 8a, 8c sind rechtwinklig zu dem mittleren Schenkel 8b und zueinander parallel ausgerichtet. Die dem Schenkel 8b gegenüberliegende offene Seite 15 des Gehäuses 2 dient dem Einschub des Halteelementes 3. Der Schenkel 8b bildet mit seiner Oberkante xₐ das obere Niveau des Gehäuses 2, welches dem oberen Niveau eines nicht gezeigten Fahrzeugrahmens entspricht. In der ersten Höhenlage steht daher das obere Ende 4a des Drehzapfens 4 nicht über das Niveau der Oberkante xₐ nach oben über.

Das Halteelement 3 weist eine im Querschnitt viereckige Grundform auf. In axialer Richtung sind drei Verbindungselemente 6a, 6b, 6c versetzt zueinander in Form dreier Halteränder 11 a, 11 b, 11 c ausgebildet, von denen in der ersten Höhenlage der obere Halterand 6a in ein komplementäres Element 7a des Gehäuses 2, in diesem Fall eine Einschubnute 10, eingeschoben ist. Die Einschubnute 10 befindet sich jeweils auf den einander zugewandten Innenseiten 9 der Schenkel 8a, 8b, 8c.

In der ersten Höhenlage wird das Halteelement 3 lediglich für eine spätere Verwendung bereitgehalten und nimmt keine äußeren Lasten auf. Damit das Halteelement 3 während des Fahrbetriebes nicht in Richtung der offenen Seite 15 herauswandert und verloren geht, befindet sich endseitig an den freien Enden der Schenkel 8a, 8c ein Sicherungsbolzen 16. Der Sicherungsbolzen 16 wird von einer Seite durch zwei in einer Flucht liegende Bohrungen 17a, 17b eingesteckt und ist gegen ein Herausfallen gesichert. Hierfür weist das Halteelement 3 einen bis zu dem Drehzapfen 4 heranreichenden freien Bauraum in Form einer großflächigen Ausnehmung 18 auf, durch welche der eingesteckte Sicherungsbolzen 16 hindurchgeführt ist. Bei einem Herauswandern des Halteelementes 3 aus dem Gehäuse 2 stößt der Drehzapfen 4 gegen den Sicherungsbolzen 16. Eine zusätzliche Verliersicherung 21 verbindet beispielsweise in Form einer Kette das Halteelement 3 mit dem Gehäuse 2 dauerhaft.

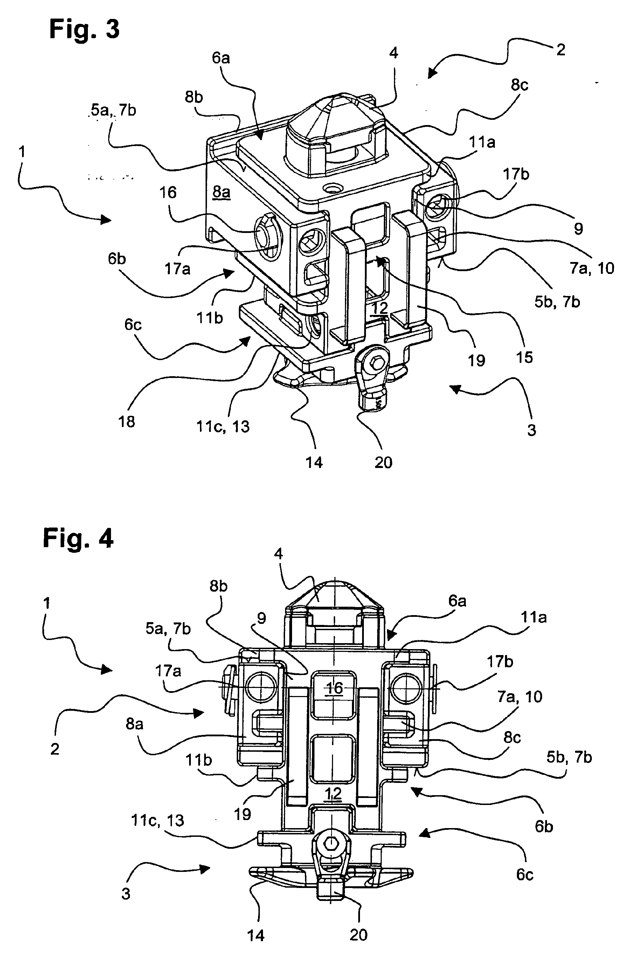

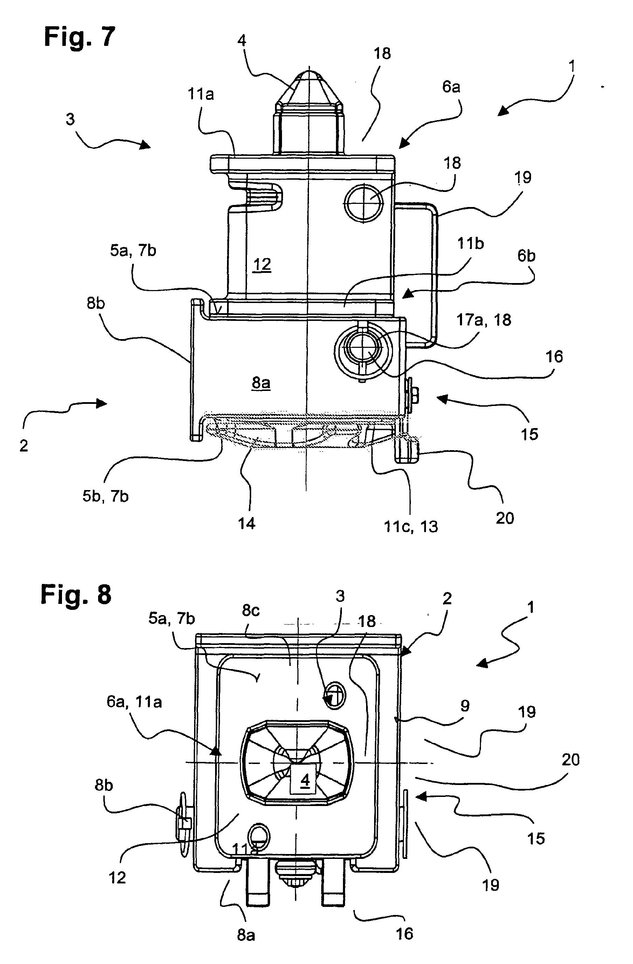

Für einen Wechsel der Höhenlage ist es notwendig, zunächst den Sicherungsbolzen 16 herauszunehmen und anschließend das Halteelement 3 vollständig in Richtung der freien Seite 15 (siehe auch Figur 8) aus dem Gehäuse 2 herauszuziehen. Dieses wird durch an der freien Seite 15 angeordnete Griffe 19 erleichtert. Anschließend kann beispielsweise die in Figuren 3 und 4 dargestellte zweite Höhenlage eingestellt werden.

Die zweite Höhenlage gemäß der Figuren 3 und 4 ermöglicht das Eingreifen des Drehzapfens 4 in einen unmittelbar auf dem Gehäuse 2 aufstehenden Containerbeschlag. Die Position des Halteelements 3 ist zusammen mit dem darin gelagerten Drehzapfen 4 relativ zu dem Gehäuse 2 nach oben versetzt. Das Haltelement 3 stützt sich mit seinem oberen Halterand 11 a auf der Oberseite 5a des Gehäuses 2 ab und liegt ebenfalls mit seinem mittleren Halterand 11 b an der Unterseite 5b des Gehäuses 2 an. Der vertikale Abstand der Haltränder 11 a, 11 b entspricht der vertikalen Höhe des Gehäuses 2. In diesem Fall wird das komplementäre Element 7b seitens des Gehäuses 2 gegenüber den Verbindungselementen 6a, 6b des Halteelementes 3 aus der Oberseite 5a und der Unterseite 5b des Gehäuses 2 gebildet. Das komplementäre Element 7a in Form der Einschubnute 10 bleibt in der zweiten Höhenlage unbenutzt.

Nach dem Eingreifen des Drehzapfens 4 in einen nicht gezeigten Containerbeschlag muss der Drehzapfen 4 verspannt, das heißt in Richtung des Halteelementes 3 beziehungsweise Gehäuses 2 angezogen werden. Hierfür ist an dem unteren Ende des Drehzapfens 4 eine Spannmutter 14 angeordnet. Die Spannmutter 14 liegt endseitig vollständig unterhalb des Halteelementes 3, damit ein ungehinderter Zugriff darauf erfolgen kann. Ein unbeabsichtigtes Lösen der Spannmutter 14 wird durch eine Sicherungsfalle 20 verhindert, die an dem unteren Ende des Halteelementes 3 befestigt ist und bis in die Bewegungsebene der Spannmutter 14 herabreicht.

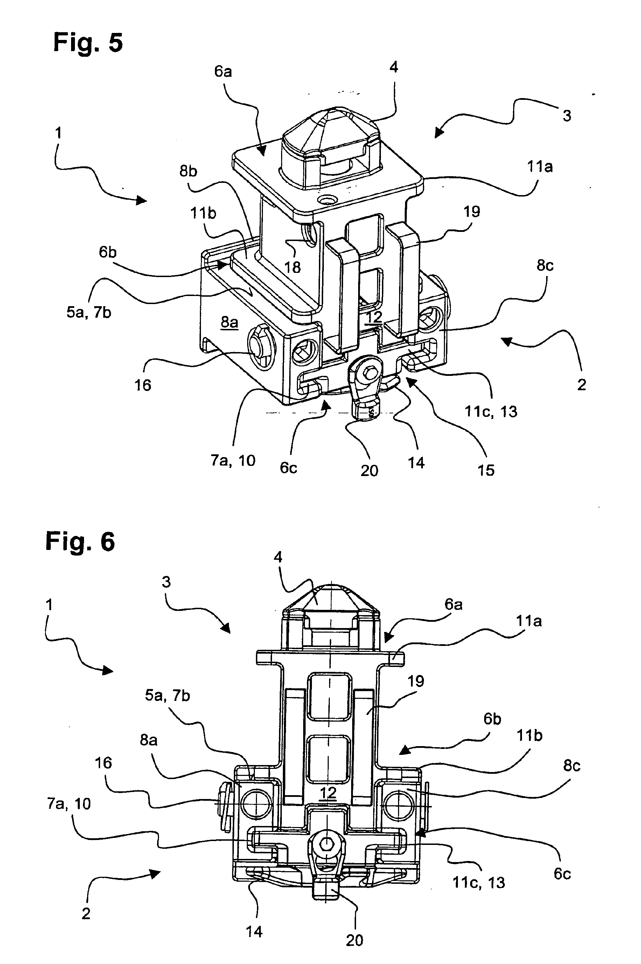

Bei einem mit mehreren Containerverriegelungen 1 verspannten Container ist aufgrund der spiegelsymmetrischen Anordnung an dem Fahrzeug ein unbeabsichtigtes Herauswandern der Halteelemente 3 nach außen nicht möglich. Dennoch weist das Halteelement 3 eine Ausnehmung 18 in Form einer Bohrung auf, durch welche der Sicherungsbolzen 16 in der zweiten Höhenlage hindurch gesteckt werden kann. Diese Ausnehmung 18 befindet sich zwischen dem oberen und mittleren Halterand 11 a, 11 b und ist besonders gut in der Figur 5 zu erkennen. Die Sicherung mittels des Sicherungsbolzens 16 ermöglicht ein Fahren mit unverändert in der zweiten Höhenlage befindlichen Halteelementen 3 auch ohne einem darauf aufstehenden Container. Andernfalls müssten bei jeder Leerfahrt die Halteelemente 3 in die erste Höhenlage gebracht werden.

Ein in der dritten Höhenlage befindliches Halteelement 3 zeigen die Figuren 5 und 6. Dabei stützt sich der mittlere Halterand 11 b auf der Oberseite 5a des Gehäuses 2 ab. Zusätzlich befindet sich der untere Halterand 11 c in Eingriff mit der in allen Schenkeln 8a, 8b, 8c vorhandenen Einschubnute 10. Der vertikale Abstand zwischen dem ersten und zweiten Halterand 11 a, 11 b entspricht dem Maß der Erhöhung des Drehzapfens gegenüber der zweiten Höhenlage. Zwischen dem ersten und zweiten Halterand 11 a, 11 b ist in der Figur 5 ferner die Ausnehmung 18 in Form einer kreisrunden Bohrung zu sehen, durch welche in der zweiten Höhenlage ein Sicherungsbolzen hindurch greift. Die in der dritten Höhenlage benötigte Ausnehmung 18 ist in der Figur 3 zwischen dem mittleren und unteren Halterand 11b, 11 c zu erkennen.

Für ein schubladenartiges Einschieben des Halteelementes 3 in das Gehäuse 2 ist ein Spiel zwischen den Verbindungselementen 6a, 6b, 6c des Halteelementes 3 und den komplementären Elementen 7a, 7b vorteilhaft. Dieses führt jedoch in der dritten Höhenlage aufgrund des großen Hebelarmes des Halteelementes 3 gegenüber dem Gehäuse 2 zu einem erhöhten Verschleiß beider Bauteile. Aus diesem Grund ist das Halteelement 3 zweiteilig aufgebaut und umfasst einen Oberbau 12 und eine Spannplatte 13. Der Oberbau 12 trägt den oberen und mittleren Halterand 11a, 11b, die Spannplatte 13 lediglich den unteren Halterand 11 c. Der vertikale Abstand zwischen dem mittleren Halterand 11 b und dem unteren Halterand 11 c lässt sich durch ein Anziehen der Spannmutter verringern, da diese von unten den unteren Halterand 11c gegen die Oberseite der Einschubnute 10 drückt. Die Spannmutter 14 ist auch in der dritten Höhenlage nach unten beabstandet zu dem Gehäuse 2.

In der Figur 7 ist die in der dritten Höhenlage befindliche Containerverriegelung 1 in einer Seitenansicht dargestellt. Der Schenkel 8b weist für eine Befestigung an einem Fahrzeug eine geringfügig größere Höhe als die anderen Schenkel 8a, 8c auf. Der Abstand von der nach außen gerichteten Fläche des Schenkels 8b zu der durch den Drehzapfen 4 verlaufenden Mittellinie ist das so genannte Stichmaß, welches mit konventionellen Containerverriegelungen übereinstimmt. Darüber hinaus ist die parallele Ausrichtung des Halterandes 11 a, 11 b zu der Ober- und Unterseite 5a, 5b des Gehäuses 2 erkennbar. Der ebenfalls dazu parallel ausgerichtete untere Halterand 11 c ist durch den Schenkel 8a weitgehend verdeckt.

Die Figur 8 zeigt eine Draufsicht auf das in der dritten Höhenlage befindliche Halteelement 3. Hierbei wird besonders gut die Überlappung der Schenkel 8a, 8b, 8c durch den oberen Halterand 11a deutlich. Die in der Figur 8 bezeichnete Ausnehmung 18 ist in der ersten Höhenlage für ein Durchführen des Sicherungsbolzens 16 relevant und durch den freien Bauraum zwischen dem Drehzapfen 4 und der offenen Seite 15 oberhalb des Halterandes 11a definiert.

### Bezugszeichenliste

- 1: Containerverriegelung
- 2: Gehäuse
- 3: Halteelement
- 4: Drehzapfen
- 4a: oberes Ende Drehzapfen
- 5a: Oberseite Gehäuse
- 5b: Unterseite Gehäuse
- 6a-c: Verbindungselemente Halteelement
- 7a, b: komplementäres Element Gehäuse
- 8a-c: Schenkel Gehäuse
- 9: Innenseite Schenkel
- 10: Einschubnute
- 11 a-c: Halterand
- 12: Oberbau
- 13: Spannplatte
- 14: Spannmutter Drehzapfen
- 15: Offene Seite Gehäuse
- 16: Sicherungsbolzen
- 17a, b: Bohrung
- 18: Ausnehmung
- 19: Griff
- 20: Sicherungsfalle
- 21: Verliersicherung
- Xₐ: Oberkante Schenkel 8b

## Patentansprüche

1. Höhenverstellbare Containerverriegelung (1), umfassend ein an einem Fahrzeugrahmen anbringbares Gehäuse (2) und ein in unterschiedlichen Höhenlagen relativ zu dem Gehäuse (2) verstellbares Halteelement (3), wobei in dem Halteelement (3) ein Drehzapfen (4) angeordnet ist, der in einen Verriegelungsbeschlag eines Containers einführbar ist, das Halteelement (3) wahlweise in einer vorgegebenen Höhenlage in das Gehäuse (2) einsetzbar ist **dadurch gekennzeichnet dass** das Halteelement (3) übereinander angeordnete Verbindungselemente (6a-c) umfasst, die zueinander in unterschiedlichen Höhenlagen beabstandet und jeweils mit mindestens einem komplementären Element (7a, 7b) des Gehäuses (2) in Eingriff bringbar sind, und
dass das Halteelement (3) zweiteilig aufgebaut ist und einen Oberbau (12) sowie eine Spannplatte (13) umfasst, wobei der Oberbau (12) die beiden oberen Verbindungselemente (6a, 6b) und die Spannplatte (13) das untere Verbindungselement (6c) trägt.

2. Containerverriegelung nach Anspruch 1, **dadurch gekennzeichnet, dass** insgesamt drei Höhenlagen vorgesehen sind.

3. Containerverriegelung nach Anspruch 2, **dadurch gekennzeichnet, dass**
- in einer ersten abgesenkte Höhenlage das obere Ende (4a) des Drehzapfens (4) auf oder unterhalb eines Niveaus der Oberseite (5a) des Gehäuses (2) angeordnet ist,
- in einer zweiten Höhenlage der Drehzapfen (4) in Wirkeingriff mit einem Verriegelungsbeschlag eines auf dem Fahrzeugrahmen stehenden Containers und
- in einer dritten Höhenlage der Drehzapfen (4) in Wirkeingriff mit einem Verriegelungsbeschlag eines in diesem Abschnitt oberhalb beabstandet zu dem Fahrzeugrahmen stehenden Containers bringbar ist.

4. Containerverriegelung nach einem der Ansprüche 1 bis 3, **dadurch gekennzeichnet, dass** die drei Verbindungselemente (6a-c) des Halteelementes (3) als ein jeweils an drei Seiten vorstehender Halterand (11a-c) ausgebildet sind.

5. Containerverriegelung nach einem der Ansprüche 1 bis 4, **dadurch gekennzeichnet, dass** das Gehäuse (2) U-förmig mit drei Schenkeln (8a-c) ausgebildet ist.

6. Containerverriegelung nach einem der Ansprüche 1 bis 5, **dadurch gekennzeichnet, dass** das mindestens eine komplementäre Element (7a) auf der Innenseite (9) mindestens eines Schenkels (8a-c) angeordnet ist.

7. Containerverriegelung nach einem der Ansprüche 1 bis 6, **dadurch gekennzeichnet, dass** das mindestens eine komplementäre Element (7a) des Gehäuses (2) eine Einschubnute (10) ist.

8. Containerverriegelung nach einem der Ansprüche 1 bis 7, **dadurch gekennzeichnet, dass** ein weiteres komplementäres Element (7b) die Oberseite (5a) und die Unterseite (5b) des Gehäuses (2) ist, an welcher jeweils ein Halterand (11a, 11 b, 11c) anliegt.

9. Containerverriegelung nach Anspruch 7 oder 8, **dadurch gekennzeichnet, dass** sich in der ersten abgesenkten Höhenlage der Halterand (11a) in Wirkeingriff mit der Einschubnute (10) befindet.

10. Containerverriegelung nach einem der Ansprüche 4 bis 9, **dadurch gekennzeichnet, dass** in der zweiten Höhenlage ein Halterand (11 a) auf der Oberseite (5a) und ein Halterand (11 b) auf der Unterseite (5b) des Gehäuses (2) anliegen.

11. Containerverriegelung nach einem der Ansprüche 7 bis 10, **dadurch gekennzeichnet, dass** in der dritten Höhenlage ein Halterand (11 b) auf der Oberseite (5a) anliegt und ein Halterand (11 c) in Wirkeingriff mit der Einschubnute (10) steht.

12. Containerverriegelung nach einem der Ansprüche 1 bis 11, **dadurch gekennzeichnet, dass** der Drehzapfen (4) auf seiner Unterseite eine Spannmutter (14) aufweist.

13. Containerverriegelung nach Anspruch 12, **dadurch gekennzeichnet, dass** die Spannmutter (14) unterhalb des Halteelementes (3) angeordnet ist.

14. Containerverriegelung nach Anspruch 12 oder 13, **dadurch gekennzeichnet, dass** die Spannmutter (14) unterhalb der drei Schenkel (8a-c) des U-förmigen Gehäuses (2) angeordnet ist.

15. Containerverriegelung nach einem der Ansprüche 12 bis 14, **dadurch gekennzeichnet, dass** die Spannmutter (14) in festgezogenem Zustand die Spannplatte (13) gegen den Oberbau (12) drückt.

16. Containerverriegelung nach einem der Ansprüche 5 bis 15, **dadurch gekennzeichnet, dass** das U-förmige Gehäuse (2) an einer offenen Seite (15) mit einem Sicherungsbolzen (16) verschließbar ist.

17. Containerverriegelung nach Anspruch 16, **dadurch gekennzeichnet, dass** in den gegenüberliegenden Schenkeln (8a, 8c) jeweils eine Bohrung (17a, 17b) zur Aufnahme des Sicherungsbolzens (16) angeordnet ist, wobei die Achsen der Bohrungen (17a, 17b) in einer Flucht liegen.

18. Containerverriegelung nach Anspruch 16 oder 17, **dadurch gekennzeichnet, dass** in dem Haltelement (3) zum Durchstecken des Sicherungsbolzens (16) in jeder verrasteten Höhenlage jeweils eine Ausnehmung (18) angeordnet ist.

19. Containerverriegelung nach einem der Ansprüche 1 bis 18, **dadurch gekennzeichnet, dass** das Halteelement (3) mittels einer Verliersicherung (21) mit dem Gehäuse (2) verbunden ist, wobei die Verliersicherung (21) aus einem flexiblen Verbindungsmittel gebildet ist.

## Claims

1. Height adjustable container locking device (1) comprising a housing (2) which can be fitted to a vehicle frame (2) and a retention element (3) which can be adjusted in various height positions relative to the housing (2), there being arranged in the retention element (3) a pivot pin (4) which can be introduced into a locking fitting of a container, and the retention element (3) optionally being able to be inserted into the housing (2) at a predetermined height position, **characterised in that** the retention element (3) comprises connection elements (6a-c) which are arranged one above the other and which are spaced-apart from each other at different height positions and which can each be brought into engagement with at least one complementary element (7a, 7b) of the housing (2), and **in that** the retention element (3) is constructed in two parts and comprises an upper structure (12) and a clamping plate (13), the upper structure (12) carrying the two upper connection elements (6a, 6b) and the clamping plate (13) carrying the lower connection element (6c).

2. Container locking device according to claim 1, **characterised in that** a total of three height positions are provided.

3. Container locking device according to claim 2, **characterised in that**
- in a first lowered height position the upper end (4a) of the pivot pin (4) is arranged on or below a level of the upper side (5a) of the housing (2),
- in a second height position the pivot pin (4) can be brought into operational engagement with a locking fitting of a container located on the vehicle frame and
- in a third height position the pivot pin (4) can be brought into operational engagement with a locking fitting of a container which is located in this portion above and with spacing from the vehicle frame.

4. Container locking device according to any one of claims 1 to 3, **characterised in that** the three connection elements (6a-c) of the retention element (3) are formed as a retention edge (11a-c) which protrudes in each case at three sides.

5. Container locking device according to any one of claims 1 to 4, **characterised in that** the housing (2) is constructed in a U-shaped manner with three members (8a-c).

6. Container locking device according to any one of claims 1 to 5, **characterised in that** the at least one complementary element (7a) is arranged at the inner side (9) of at least one member (8a-c).

7. Container locking device according to any one of claims 1 to 6, **characterised in that** the at least one complementary element (7a) of the housing (2) is an insertion groove (10).

8. Container locking device according to any one of claims 1 to 7, **characterised in that** another complementary element (7b) is the upper side (5a) and the lower side (5b) of the housing (2) which a retention edge (11a, 11b, 11c) abuts in each case.

9. Container locking device according to claim 7 or claim 8, **characterised in that**, in the first lowered height position, the retention edge (11a) is in operational engagement with the insertion groove (10).

10. Container locking device according to any one of claims 4 to 9, **characterised in that** in the second height position a retention edge (11a) abuts the upper side (5a) and a retention edge (11b) abuts the lower side (5b) of the housing (2).

11. Container locking device according to any one of claims 7 to 10, **characterised in that** in the third height position a retention edge (11b) abuts the upper side (5a) and a retention edge (11c) is in operational engagement with the insertion groove (10).

12. Container locking device according to any one of claims 1 to 11, **characterised in that** the pivot pin (4) has at its lower side a clamping nut (14).

13. Container locking device according to claim 12, **characterised in that** the clamping nut (14) is arranged below the retention element (3).

14. Container locking device according to claim 12 or claim 13, **characterised in that** the clamping nut (14) is arranged below the three members (8a-c) of the U-shaped housing (2).

15. Container locking device according to any one of claims 12 to 14, **characterised in that** the clamping nut (14) presses the clamping plate (13) against the upper structure (12) in the tightened state.

16. Container locking device according to any one of claims 5 to 15, **characterised in that** the U-shaped housing (2) can be locked with a securing bolt (16) at an open side (15).

17. Container locking device according to claim 16, **characterised in that** in each of the opposing members (8a, 8c) there is arranged a hole (17a, 17b) for receiving the securing bolt (16), the axes of the holes (17a, 17b) being in alignment.

18. Container locking device according to claim 16 or claim 17, **characterised in that** a recess (18) is arranged in the retention element (3) for inserting the securing bolt (16) at each locked height position, respectively.

19. Container locking device according to any one of claims 1 to 18, **characterised in that** the retention element (3) is connected to the housing (2) by means of a loss-prevention member (21), the loss-prevention member (21) being formed from a flexible connection means.

## Revendications

1. Dispositif (1) réglable en hauteur de verrouillage de conteneur, comprenant un boîtier (2) pouvant être installé sur un châssis de véhicule et un élément de maintien (3) réglable dans différentes positions verticales par rapport au boîtier (2), sachant qu'un pivot (4) est disposé dans l'élément de maintien (3), pivot qui peut être introduit dans une ferrure de verrouillage d'un conteneur, et que l'élément de maintien (3) peut être sélectivement inséré dans une position verticale prédéfinie dans le boîtier (2), **caractérisé en ce que** l'élément de maintien (3) comprend des éléments de liaison superposés (6a-c), qui sont mutuellement distants à différentes positions verticales et qui peuvent être respectivement amenés en engagement avec au moins un élément complémentaire (7a, 7b) du boîtier (2),
et **en ce que** l'élément de maintien (3) est réalisé en deux parties et comprend une superstructure (12) ainsi qu'une plaque de serrage (13), sachant que la superstructure (12) porte les deux éléments de liaison supérieurs (6a, 6b) et que la plaque de serrage (13) porte l'élément de liaison inférieur (6c).

2. Dispositif de verrouillage de conteneur selon la revendication 1, **caractérisé en ce qu'**il est prévu au total trois positions verticales.

3. Dispositif de verrouillage de conteneur selon la revendication 2, **caractérisé en ce que**
- dans une première position verticale abaissée, l'extrémité supérieure (4a) du pivot (4) est disposée au niveau ou en dessous du niveau de la face supérieure (5a) du boîtier (2),
- dans une deuxième position verticale, le pivot (4) peut être amené en engagement actif avec une ferrure de verrouillage d'un conteneur reposant sur le châssis du véhicule, et
- dans une troisième position verticale, le pivot (4) peut être amené en engagement actif avec une ferrure de verrouillage d'un conteneur qui, dans cette partie, repose à distance au-dessus du châssis du véhicule.

4. Dispositif de verrouillage de conteneur selon l'une des revendications 1 à 3, **caractérisé en ce que** les trois éléments de liaison (6a-c) de l'élément de maintien (3) sont réalisés sous la forme d'un bord de maintien respectif (11a-c) dépassant sur trois côtés.

5. Dispositif de verrouillage de conteneur selon l'une des revendications 1 à 4, **caractérisé en ce que** le boîtier (2) est réalisé en forme de U avec trois branches (8a-c).

6. Dispositif de verrouillage de conteneur selon l'une des revendications 1 à 5, **caractérisé en ce que** l'élément complémentaire au moins unique (7a) est disposé sur la face intérieure (9) d'au moins une branche (8a-c).

7. Dispositif de verrouillage de conteneur selon l'une des revendications 1 à 6, **caractérisé en ce que** l'élément complémentaire au moins unique (7a) du boîtier (2) est une rainure d'insertion (10).

8. Dispositif de verrouillage de conteneur selon l'une des revendications 1 à 7, **caractérisé en ce qu'**un autre élément complémentaire (7b) est formé par la face supérieure (5a) et la face inférieure (5b) du boîtier (2), contre lesquelles s'applique respectivement un bord de maintien (11a, 11b, 11c).

9. Dispositif de verrouillage de conteneur selon la revendication 7 ou 8, **caractérisé en ce que**, dans la première position verticale abaissée, le bord de maintien (11a) se trouve en engagement actif avec la rainure d'insertion (10).

10. Dispositif de verrouillage de conteneur selon l'une des revendications 4 à 9, **caractérisé en ce que**, dans la deuxième position verticale, un bord de maintien (11a) s'applique sur la face supérieure (5a) et un bord de maintien (11b) sur la face inférieure (5b) du boîtier (2).

11. Dispositif de verrouillage de conteneur selon l'une des revendications 7 à 10, **caractérisé en ce que**, dans la troisième position verticale, un bord de maintien (11b) s'applique sur la face supérieure (5a) et un bord de maintien (11c) se trouve en engagement actif avec la rainure d'insertion (10).

12. Dispositif de verrouillage de conteneur selon l'une des revendications 1 à 11, **caractérisé en ce que** le pivot (4) présente sur sa face inférieure un écrou de serrage (14).

13. Dispositif de verrouillage de conteneur selon la revendication 12, **caractérisé en ce que** l'écrou de serrage (14) est disposé en dessous de l'élément de maintien (3).

14. Dispositif de verrouillage de conteneur selon la revendication 12 ou 13, **caractérisé en ce que** l'écrou de serrage (14) est disposé en dessous des trois branches (8a-c) du boîtier (2) en forme de U.

15. Dispositif de verrouillage de conteneur selon l'une des revendications 12 à 14, **caractérisé en ce que** l'écrou de serrage (14), dans l'état serré à bloc, presse la plaque de serrage (13) contre la superstructure (12).

16. Dispositif de verrouillage de conteneur selon l'une des revendications 5 à 15, **caractérisé en ce que** le boîtier (2) en forme de U peut être fermé sur un côté ouvert (15) par une goupille de sécurité (16).

17. Dispositif de verrouillage de conteneur selon la revendication 16, **caractérisé en ce qu'**un perçage respectif (17a, 17b) destiné à recevoir la goupille de sécurité (16) est disposé dans les branches opposées (8a, 8c), sachant que les axes des perçages (17a, 17b) sont alignés.

18. Dispositif de verrouillage de conteneur selon la revendication 16 ou 17, **caractérisé en ce qu'**un évidement respectif (18) est disposé dans l'élément de maintien (3) pour enfiler la goupille de sécurité (16) dans chaque position verticale enclenchée.

19. Dispositif de verrouillage de conteneur selon l'une des revendications 1 à 18, **caractérisé en ce que** l'élément de maintien (3) est relié au boîtier (2) à l'aide d'un moyen de retenue (21), sachant que le moyen de retenue (21) est formé d'un moyen de liaison souple.
